# EUROPÄISCHE PATENTSCHRIFT

(11) **EP 0 600 903 B1**
(45) Veröffentlichungstag und Bekanntmachung des Hinweises auf die Patenterteilung: **28.06.1995**
(21) Anmeldenummer: 92914322.0
(22) Anmeldetag: 03.07.1992
(51) Int. Cl.: B01D 1/00, B01D 5/00

(54) **VERFAHREN UND VORRICHTUNG ZUR GASENTFERNUNG BEI DER EINDAMPFUNG VON ORGANISCH UND/ODER ANORGANISCH BELASTETEM WASSER**
PROCESS AND DEVICE FOR REMOVING GAS IN THE EVAPORATION OF ORGANICALLY AND/OR INORGANICALLY CONTAMINATED WATER
PROCEDE ET DISPOSITIF D'ELIMINATION DES GAZ LORS DE L'EVAPORATION D'EAU CHARGEE DE MATIERES ORGANIQUES ET/OU ANORGANIQUES

(30) Priorität: 31.08.1991 DE 4128992
(43) Veröffentlichungstag der Anmeldung: 15.06.1994
(73) Patentinhaber: HOISS, Jakob, D-80637 München (DE)
(72) Erfinder: HOISS, Jakob, D-80637 München (DE)
(74) Vertreter: Fuhlendorf, Jörn, Dipl.-Ing.
(86) Internationale Anmeldenummer: EP9201505
(87) Internationale Veröffentlichungsnummer: WO9304751

(56) Entgegenhaltungen:
- DE-C- 3 937 608
- US-A- 3 736 234

## Beschreibung

Die vorliegende Erfindung bezieht sich auf ein Verfahren zur Gasentfernung bei der Eindampfung von organisch und/oder anorganisch belastetem Wasser nach dem Oberbegriff des Anspruchs 1 und auf eine Vorrichtung zur Durchführung des Verfahrens nach dem Oberbegriff des Anspruchs 12.

Aus der DE-C-39 37 608 ist ein Verfahren und eine Vorrichtung zum Reinigen von organisch belastetem Abwasser bekannt geworden, bei dem ein Primärsystem für das Abwasser und ein in sich geschlossenes Sekundärsystem mit Wärmepumpe als Verdampfer- und Kühlsystem verwendet wird. Zur Reinigung des Abwassers wird die Kondensationstemperatur des bei der Verdampfung des Abwassers freigewordenen Brüdens nur um einige Grad Celsius unterhalb der Verdampfungstemperatur gelegt. Bei diesem bekannten Verfahren und dieser bekannten Vorrichtung werden jedoch lediglich diejenigen Gase, wie bspw. Inertgase, die leichter als Wasserdampf sind und in einem oberen Bereich des Kondensators sich sammeln, aus dem primärseitig unter Überdruck stehenden Kondensator abgelassen. Ansonsten wird das gereinigte Kondensat ohne weitere Gasentfernungsbehandlung abgenommen.

Demgegenüber hat sich die vorliegende Erfindung zur Aufgabe gemacht, ein Verfahren und eine Vorrichtung zur Gasentfernung bei der Eindampfung von organisch und/oder anorganisch belastetem Wasser zu schaffen, mit dem bsw. der in verfahrenstechnisch einfacher Weise auch solche im belasteten Wasser gelösten Gase aus diesem bei dessen Reinigung entfernt werden sollen, die schwerer als der bei der Verdampfung des belasteten Wassers entstehende Wasserdampf sind und/oder auch bei der Kondensationstemperatur des belasteten Wasserdampfes noch nicht kondensieren.

Zur Lösung dieser Aufgabe sind bei dem Verfahren der eingangs genannten Art die im Anspruch 1 angegebenen Merkmale und bei einer Vorrichtung der eingangs genannten Art die im Anspruch 12 angegebenen Merkmale vorgesehen.

Die Löslichkeit von Gasen in Flüssigkeiten, insbesondere in Wasser hängt unter der Voraussetzung niedriger Konzentrationen wesentlich vom Druck und der Temperatur ab; sie nimmt bei der überwiegenden Anzahl der bekannten Gase bei steigender Temperatur ab und bei steigendem Druck zu. Mit einer temperaturgesteuerten Kondensation kann daher dann eine Gasentfernung erzielt werden, wenn sich die Temperaturabhängigkeit stärker als die Druckabhängigkeit auswirkt. Im erfindungsgemäßen Fall beträgt bspw. die Verdampfungstemperatur des belasteten Wassers etwa 138°C, was lediglich einen Wasserdampf-Druck von 3,4 bar bedingt; bei einer bspw. um 5°C niedrigeren Kondensation des Wasserdampfes ist noch ein Gesamtdruck von 3,0 bar vorhanden. Für die hier interessierenden, aus den Verunreinigungen des belasteten Wassers resultierenden und nach der thermischen Behandlung sich noch im Dampf befindlichen Gase gilt, daß sie bei niedrigeren Temperaturen als 133°C sieden und sich weit weniger im Kondensat lösen als dies durch den um 2,0 bar gegenüber dem Einlaß des belasteten Wassers erhöhten Druck vorher bedingt ist.

Durch die erfindungsgemäßen Maßnahmen ist es daher möglich, die Entfernung auch solcher Gase in einfacher Weise zu bewerkstelligen, die einerseits zwar schwerer als Wasserdampf, aber andererseits leichter als das Kondensat sind. Es wird erreicht, daß diese beiden Stoffe (gelöste Gase einerseits und Kondensat andererseits) im wesentlichen getrennt aus dem Kondensator herausgebracht werden können. Dies wird unter anderem dadurch möglich, daß die bei der hohen Kondensationstemperatur noch freien und zu entfernenden Gase nicht wieder in das Kondensat desorbieren, bzw. sich lösen können.

Sehr wesentlich ist diese Art der Gasentfernung bei der Eindampfung von organisch und/oder anorganisch belastetem Abwasser bspw. bei industriellen Waschanlagen für Werkzeuge oder Halbzeuge, bei Waschanlagen für Kraftfahrzeuge und dgl..

Mit den Merkmalen des Anspruchs 2 bzw. des Anspruchs 13 wird erreicht, daß die Kondensationstemperatur in einfacher Weise im wesentlichen konstant gehalten werden kann.

Sind die Merkmale gemäß Anspruch 4 bzw. gemäß Anspruch 14 vorgesehen, so sind ohne weitere besondere Maßnahmen auch insbesondere die Inertgase ohne weiteres entfernbar.

Um das Mitreißen von Tropfen bei der Überführung des belasteten Wasserdampfes in den Kondensator zu verhindern, sind die Merkmale gemäß Anspruch 4 vorgesehen. Mit den Merkmalen gemäß Anspruch 5 bzw. gemäß Anspruch 15 ist zusätzlich zur bereits erfolgten Reinigung durch Destillation eine Reinigung des belasteten Wassersdampfes von Feststoffpartikeln und schmutzbeladenen Tropfen erreicht.

Werden die Merkmale gemäß Anspruch 6 bzw. gemäß Anspruch 16 verwendet, wird sichergestellt, daß die Kondensationstemperatur die vorgegebene geringe Differenz zur Verdampfungstemperatur erreicht.

Mit den Merkmalen gemäß Anspruch 7 bzw. gemäß einem oder mehreren der Ansprüche 17 bis 19 ist erreicht, daß einerseits sowohl das Kühlwasser für den Kondensator als auch das Destillat ohne Nachverdampfung auf eine entsprechende Temperatur abgekühlt werden können, und daß andererseits die verschiedenen Kühlaufgaben durch zweierlei Kühlwassersysteme erfüllt werden.

Mit den Merkmalen gemäß Anspruch 8 bzw. einem der Ansprüche 20 und 21 ist erreicht, daß die aus dem Kühlwasser abzuführende Wärme in anderer Weise genutzt werden kann, also der Energierückgewinnung dient. Dabei ergibt sich mit den Merkmalen gemäß Anspruch 9 eine einfache Regelung.

Eine weitere Vereinfachung in verfahrenstechnischer als auch konstruktiver Hinsicht ergibt sich durch die Merkmale gemäß Anspruch 10 bzw. 22, da durchaus auch auf ein zweites Kühlwassersystem verzichtet werden kann.

Weitere den mechanischen Aufbau und die Handhabung der Vorrichtung vereinfachende bzw. erleichternde vorteilhafte Ausgestaltungen ergeben sich aus dem jeweiligen der betreffenden Unteransprüche 23 bis 27.

Mit den Merkmalen gemäß Anspruch 11 bzw. 28 ist über eine weitere Energierückgewinnung eine weitere Energieersparnis erreicht, da die Enthalpie der genannten gas- und/oder tröpfchenförmigen Abfallprodukte in das belastete Wasser rückgeführt wird. Desweiteren ist vermieden, daß die Umwelt mit den entsprechenden Abfallprodukten belastet wird. Ein weiterer Vorteil ist darin zu sehen, daß die abgetauchte Einführung des Austrittsöffnungen dieser Abfallprodukte in eine kühle Wasservorlage verhindert, daß ein Zuwachsen dieser Austrittsöffnungen aufgrund Entspannungskristallisation auftritt.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer Darstellung ein Fließbild einer Vorrichtung zur Gasentfernung bei der Eindampfung von organisch und/oder anorganisch belastetem belasteten Wasser, gemäß einem ersten Ausführungsbeispiel vorliegender Erfindung,
- Figur 2: in vergrößerter Darstellung denjenigen Teil der Vorrichtung, der das Ausdampfgefäß mit Zyklonabscheider und den Kondensator enthält,
- Figuren 3 und 4: der Figur 1 entsprechende Darstellungen von Vorrichtungen gemäß einem zweiten und einem dritten Ausführungsbeispiel vorliegender Erfindung.

Die in der Zeichnung gemäß dreier Ausführungsbeispiele vorliegender Erfindung dargestellte Vorrichtungen 11, 111 und 211 dienen zur Gasentfernung bei der Eindampfung von organisch und/oder anorganisch belastetem Wasser, d.h., neben der Entfernung von inerten Gasen, die leichter als der Destillatdampf sind, insbesondere die Entfernung von solchen Gasen, die schwerer als der Destillatdampf sind. Derartige Vorrichtungen 11, 111 und 211 werden bspw. in industriellen Waschanlagen für Werkzeuge und Halbzeuge, ferner in Waschanlagen für Kraftfahrzeuge zur Aufbereitung des belasteten Wassers, aber auch von Wasser mit nur geringer Belastung, verwendet.

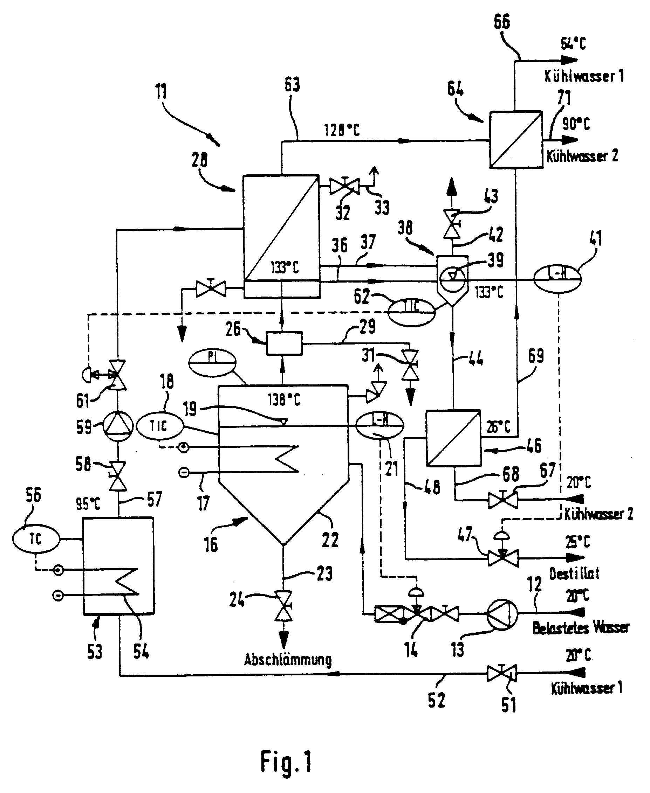

Gemäß dem in Figur 1 dargestellten ersten Ausführungsbeispiel wird das organisch und/oder anorganisch belastete Wasser bei bspw. etwa 20°C durch eine Leitung 12 über eine Pumpe 13 und ein Regelventil 14 in ein Verdampfer- bzw. Ausdampfgefäß 16 eingebracht. Das Ausdampfgefäß 16 ist mit einer bspw. elektrischen Heizung 17 versehen, die über ein Temperaturregelgerät 18 derart gesteuert ist, daß das belastete Wasser bei bspw. etwa 138°C (und etwa 3,4 bar) zur Verdampfung bringt. Bedingt durch Komponenten im belasteten Wasser, kann auch eine Siedepunktserhöhung erfolgen. Der Füllstand 19 des zu verdampfenden belasteten Wassers im Ausdampfgefäß 16 wird über einen Niveauregler 21, der mit dem Regelventil 14 verbunden ist, im wesentlichen konstant gehalten. An seinem unteren Ende ist das Ausdampfgefäß 16 für die bei der Verdampfung sich abtrennenden festen Stoffe und sonstige Schwebstoffe mit einem kegelförmigen Austragsteil 22 versehen, dessen Austragsleitung 23 mit einem Ventil 24 verschließbar ist. Dieses Konzentrat im Ausdampfungsgefäß 16 kann entweder kontinuierlich über das Ventil 24 abgezogen werden, oder es wird solange eingedampft, bis eine eben noch flüssige Substanz vorhanden ist, die dann aufgrund des noch im Innenraum herrschenden Überdruckes nach Abschalten der Heizung 17 und der Speiseventile 14 bei gleichzeitigem Öffnen des Ventiles 24 automatisch entleert wird (Abschlämmung).

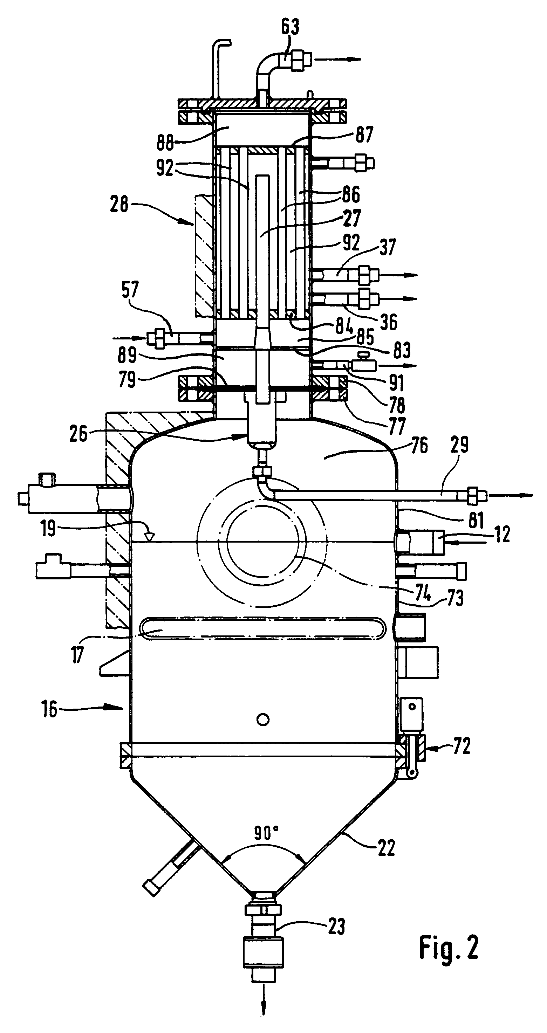

Der bei einer Verdampfungstemperatur von bspw. etwa 138 °C bei einem Druck von 3,4 bar erzeugte belastete Wasserdampf steigt nach oben und passiert einen Zyklonabscheider 26, in welchem die Trennung von mitgerissenen Tröpfchen und Partikeln aufgrund einer sehr hohen Zentrifugalbeschleunigung des Dampfes stattfindet. Der Dampf gelagt radial in eine im Zyklonabscheider 26 enthaltene Spirale, wird dort beschleunigt und tritt über ein mittiges Tauchrohr 27 (Figur 2) aus und in einen Kondensator 28 ein. Über ein bodenseitiges Rohr 29 im Zyklonabscheider 26 werden die auszentrifugierten Tröpfchen und Partikel ausgebracht. Das bodenseitige Rohr ist mit Hilfe eines Ventils 31 verschließbar. Die Ausdampfung aus dem Ausdampfgefäß 16 erfolgt mit einer niedrig gehaltenen Geschwindigkeit in der Größenordnung von bspw. etwa ≦ 0,1 m/s, um das Mitreißen von Tropfen zu verhindern.

Der im Zyklonabscheider 26 gereinigte Wasserdampf gelangt in den Kondensator 28 und wird dort bspw. bei einer Temperatur von 133°C und einem Druck von 3,0 bar kondensiert. Die bei der Verdampfung sich lösenden leichteren Gase, insbesondere die Inertgase sammeln sich im oberen Bereich des Kondensators 28 und werden über eine mit einem Ventil 32 verschließbare Leitung 33, vorzugsweise intervallmäßig, ausgelassen. Demgegenüber gelangen diejenigen Gase, die sich beim Verdampfen aus dem Wasser gelöst haben und die schwerer als der Wasserdampf sind, mit dem sich im Kondensator 28 absetzenden Destillat nach unten. Durch diese Hochtemperaturkondensation ist jedoch verhindert, daß sich diese Gase wieder im Destillat lösen. Es werden deshalb nahe dem Boden des Kondensators 28 das Destillat einerseits und die freien Gase, die schwerer als der Wasserdampf, jedoch leichter als das Destillat sind, über Rohrleitungen 36 und 37 getrennt abgezogen. Die beiden Rohrleitungen 36 und 37 verlaufen entsprechend der hauptsächlichen räumlichen Anordnung von Destillat und freien Gasen in unterschiedlichen Höhen parallel zueinander und münden in eine Entgasungsstation 38.

Die das Destillat aus dem Kondensator 28 abführende Rohrleitung 36 mündet in die Entgasungsstation 38 etwa in Höhe des Destillatspiegels 39, der über einen Niveauregler 41 auf konstanter geodätischer Höhe gehalten wird. In dem Raum oberhalb des Destillatspiegels 39 der Entgasungsstation 38 befinden sich die genannten aus dem Kondensator 28 abgezogenen, freien Gase, die entfernt werden sollen. Hierzu ist am oberen Ende der Entgasungsstation 38 eine Rohrleitung 42 angeordnet, über deren verschließbares Ventil 43 die Gase aufgrund des Überdrucks abgeblasen und ggf. danach gewaschen oder kondensiert werden. In der Entgasungsstation 38 besitzt das Destillat nach wie vor die hohe Kondensationstemperatur von bspw. etwa 133°C, was weiterhin verhindert, daß die zu entfernenden Gase sich wieder im Destillat lösen können. Am unteren Ende der Entgasungsstation 38 ist eine Ablaßleitung 44 vorgesehen, die zu einem ersten Rückkühler 46 führt, dessen Ausgang mit einer mit einem Ventil 47 verschließbaren Auslaßleitung 48 verbunden ist, aus der das Destillat bei einer Temperatur von bspw. etwa 25°C mit noch herrschendem Überdruck ausgelassen wird. Das Regelventil 47 in der Auslaßleitung 48 ist mit dem Niveauregler 41 der Entgasungsstation 38 verbunden,so daß auf diese Weise der Destillatspiegel 39 konstant gehalten werden kann.

Die Vorrichtung 11 besitzt ein erstes Kühlsystem, das eine mit einem Ventil 51 verschließbare Einlaßleitung 52 aufweist, über die Kühlwasser mit einer Temperatur von bspw. 20°C und Überdruck in einen Kühlwasser-Vorwärmer 53 eingebracht wird. Der Kühlwasser-Vorwärmer 53 besitzt eine bspw. elektrische Heizung 54, mittels der das Kühlwasser auf bspw. 95°C erwärmt wird. Zur Konstanthaltung dieser erhöhten Kühlwassertemperatur ist der Kühlwasser-Vorwärmer 53 mit einem Temperaturregler 56 versehen. Ausgangsseitig am Kühlwasser-Vorwärmer 53 schließt sich eine Leitung 57 an, in der in Strömungsrichtung hintereinander ein Ventil 58, eine Pumpe 59 und ein Regelventil 61 vorgesehen sind. Die Leitung 57 mündet in den Kondensator 28 und führt dort Kühlwasser ein, damit der gereinigte Wasserdampf bei bspw. 133°C zum Destillat kondensiert; das Kühlwasser wird hierbei auf bspw. 128°C aufgeheizt. Das Regelventil 61 ist mit einem Temperaturregler 62 für die Entgasungsstation 38 verbunden, so daß durch Regelung der Kühlwasser-Zufuhrmenge in den Kondensator 28 die Destillattemperatur (hier etwa 133°C) im wesentlichen konstant gehalten werden kann. Am kühlsystemseitigen Ausgang des Kondensators 28 tritt das Kühlwasser durch eine Leitung 63 mit einer Temperatur von bspw. etwa 128°C (unter dem im wesentlichen von der Pumpe 59 erzeugten Überdruck) aus und gelangt in einen zweiten Rückkühler 64, aus dem das Kühlwasser des ersten Kühlsystems durch eine Rohrleitung 66 bei einer Temperatur von bspw. 64°C ohne Nachverdampfung austritt.

Die Vorrichtung 11 besitzt ein zweites Kühlsystem, das den ersten und den zweiten Rückkühler 46 bzw. 64 beinhaltet. In dieses Kühlsystem tritt Kühlwasser über eine mit einem Ventil 67 verschließbare Rohrleitung 68 in den ersten Rückkühler 46 mit einer Temperatur von bspw. etwa 20°C mit aus dem Kühlwassernetz stammenden Überdruck ein. Aus dem ersten Rückkühler 46 tritt dieses Kühlwasser mit einer Temperatur von bspw. etwa 26°C durch eine Leitung 69 aus und gelangt in den zweiten Rückkühler 64, aus dem es mit einer Temperatur von bspw. etwa 90°C (bei entsprechendem Überdruck) über eine Leitung 71 ohne Nachverdampfung austritt.

Gemäß Figur 2 ist das kegelförmige Austragsteil 22 am Ausdampfgefäß 16 mit Hilfe eines Schnellverschlusses 72 am unteren Ende des zylindrischen Teils 73 abklappbar gehalten. Auf diese Weise kann, falls das Austragsteil 22 verstopft ist, dieses in einfacher Weise gereinigt werden. An einem Umfangsbereich des zylindrischen Teils 73 besitzt das Ausdampfgefäß 16 ein als Schauglas ausgebildetes Fenster 74, durch welches der Füllstand 19 im Gefäßraum 76 eingesehen und damit beobachtet werden kann, wie das belastete Wasser siedet, ob es schäumt, usw..

Das obere Ende des Ausdampfgefäßes 16 ist mit einem Ringflansch 77 versehen, auf den ein unterer Flansch 78 des Kondensators 28 aufgesetzt und befestigt ist. Zwischen den beiden Flanschen 77 und 78 ist eine Halteplatte 79 für den Zyklonabscheider 26 eingeklemmt, der an der Unterseite der Halteplatte 79 befestigt ist und in den Gefäßraum 76 ragt. Das bodenseitige Rohr 29 des Zyklonabscheiders 26 erstreckt sich radial durch die Außenwand 81 im oberen Bereich des zylindrischen Teils 73 des Ausdampfgefäßes 16. Das Tauchrohr 27 des Zyklonabscheiders 26 durchdringt die Halteplatte 79, einen Boden 83 und einen im Abstand darüber angeordneten Zwischenboden 84 des Kondensators 28 und ragt mittig in den Kondensator 28 hinein. Der Kondensator 28 ist durch Lösen der Flanschverbindung vom Ausdampfgefäß 16 abnehmbar und dadurch der Zyklonabscheider 26 auswechselbar. Auf diese Weise kann eine leistungsgerechte Anpassung erfolgen.

Die Kühlwasserleitung 57 des ersten Kühlsystems mündet zwischen dem Boden 83 und dem Zwischenboden 84 in einen unteren Raum 85 des Kondensators 28, der mit Kühlwasserrohren 86 in Verbindung ist. Der Kondensator 28 ist als stehender Rohrbündel-Wärmeübertrager ausgebildet, bei dem im Dampfraum 92 um die Kühlwasserrohre 86 der gereinigte jedoch noch mit Gasen belastete Wasserdampf kondensiert wird. Am oberen Ende der Kühlwasserrohre 86 ist ein gegenüber dem Dampfraum 92 mit Hilfe einer Decke 87 abgeschlossener Pufferraum 88 vorgesehen, aus dem die Kühlwasserleitung 63 austritt. Zwischen der Halteplatte 79 für den Zyklonabscheider 26 und dem Boden 83 des Kondensators 28 befindet sich ein weiterer Puffer- bzw. Leerraum 89, der durch die auswechselbare Halterung des Zylklonabscheiders 26 bedingt ist. Dieser Leerraum 89 ist mit einer Auslaßleitung 91 für den Fall von Leckagen versehen.

Wie aus Figur 2 ferner ersichtlich ist, ist am Kondensator 28 die Destillatabzugsleitung 36 nahe dem Zwischenboden 84 und in einem geringen Abstand darüber und parallel dazu die Leitung 37 zur Gasentfernung angeordnet. Daraus ist ersichtlich, daß die Regelung in der Weise gehandhabt wird, daß sich im Kondensator 28 stets nur sehr wenig Destillat im Bereich des Zwischenbodens 84 befindet bzw. dort belassen wird.

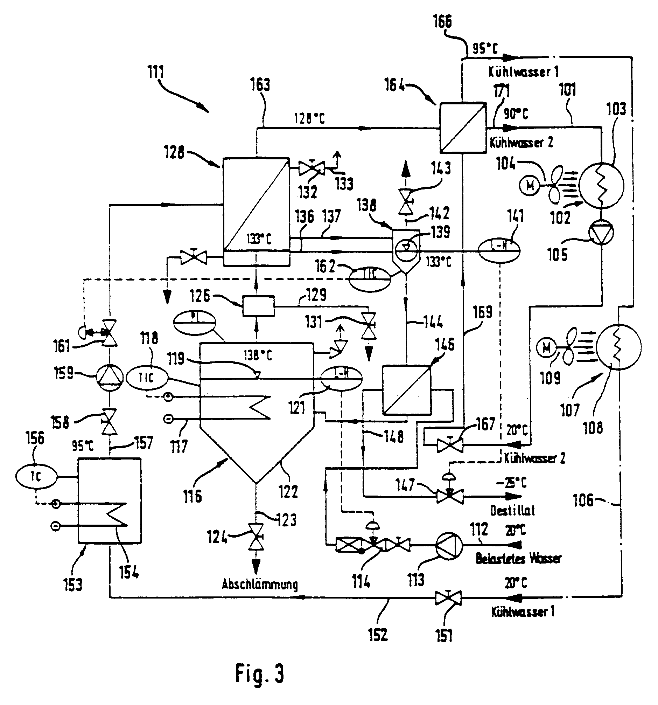

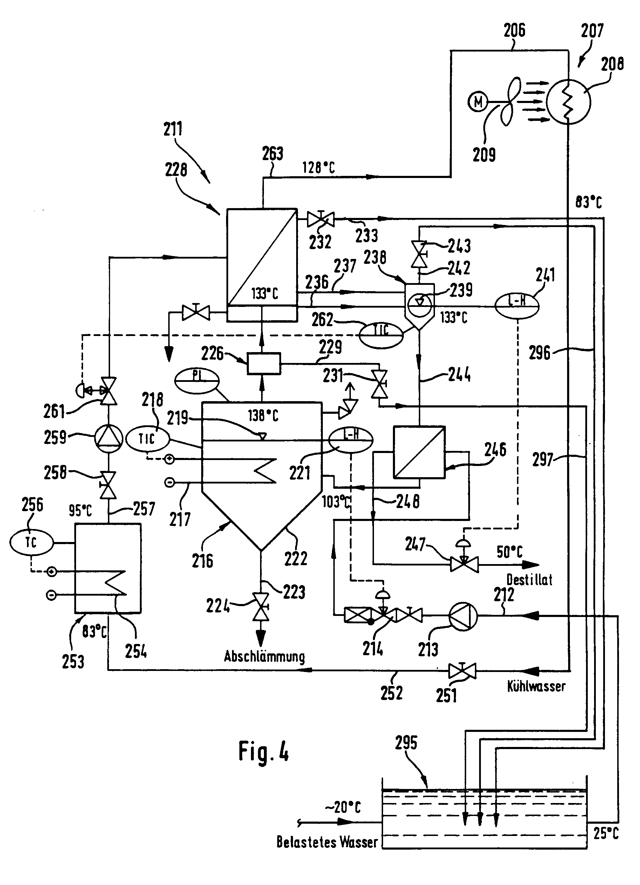

Bei den in den Figuren 3 und 4 dargestellten Ausführungsbeispielen der Vorrichtung 111 bzw. 211 sind, soweit gleiche Bauteile verwendet sind, entsprechende Bezugsziffern, jedoch mit einer "1" bzw. einer "2" vorangestellt verwendet. Im folgenden sind deshalb lediglich die Unterschiede zum ersten Ausführungsbeispiel der Vorrichtung 11 nach Figur 1 beschrieben.

Gemäß Figur 3 wird das belastete Wasser über die Leitung 112 nicht unmittelbar sondern über den Rückkühler 146 dem Ausdampfgefäß 116 zugeführt. Mit anderen Worten, das belastete Wasser wird als Kühlwasser für das durch die Ablassleitung 144 abgezogene Destillat verwendet und gelangt somit vorgewärmt in das Verdampfer- bzw. Ausdampfgefäß 116. Aus diesem Grunde wird das Kühlwasser im zweiten Kühlwassersystem über die Leitung 169 nicht über den Rückkühler 146 sondern unmittelbar zum Rückkühler 164 zur Kühlung des Kühlwassers im ersten Kühlwassersystem geführt. Außerdem ist das zweite Kühlwassersystem als geschlossenes System ausgeführt, so daß kein Neuverbrauch an Kühlwasser erfolgt. In diesem zweiten Kühlwassersystem ist in einer Rückleitung 101 ein komoiniertes Heiz-/Kühlgerät 102 vorgesehen, dessen Wärmetauscher 103 in der Rückleitung 101 liegt. Das kombinierte Heiz-/Kühlgerät besitzt ferner ein motorisch angetriebenes Gebläse 104. Bspw. ist das Gerät 102 ein Luftheizgerät, das zur Warmluft-Raumheizung verwendet werden kann. In der Rückleitung 101 des zweiten Kühlwassersystems ist ferner eine Pumpe 105 für den Kühlwasserumlauf vorgesehen.

In strichpunktiert dargestellter Weise kann auch das erste Kühlwassersystem als geschlossenes System ausgebildet sein. Hierzu ist dann eine Rückleitung 106 vorgesehen, in welcher ebenfalls der Wärmetauscher 108 eines kombinierten Heiz-/Kühlgerätes 107 vorgesehen ist, das darüberhinaus ein Gebläse 109 besitzt, dessen Warmluft bspw. zur Raumheizung verwendet werden kann. Somit ist auch im ersten Kühlwassersystem kein Neuverbrauch an Kühlwasser notwendig.

Bei der Vorrichtung 211 nach Figur 4 wird ebenfalls das über die Leitung 212 zugeführte organisch und/oder anorganisch belastete Wasser über den Rückkühler 246 dem Verdampfer- bzw. Ausdampfgefäß 216 zugeführt. Dabei erwärmt sich das bspw. bei einer Temperatur von 25°C zugeführte belastete Wasser auf eine Temperatur von 103°C durch das heiße Destillat, das bei diesem Ausführungsbeispiel mit einer Temperatur von 50°C austritt. Auch bei diesem Ausführungsbeispiel ist das erste Kühlwassersystem ein geschlossenes System, das in einer Rückleitung 206 ein mit einem Wärmetauscher 208 in einem Gebläse 209 versehenes kombiniertes Heiz-/Kühlgerät 207 enthält. Anders als beim ersten Ausführungsbeispiel vorliegender Erfindung ist im ersten Kühlwassersystem kein Rückkühler mehr enthalten. Durch das kombinierte Heiz-/Kühlgerät 207 wird erreicht, daß das aus dem Kondensator 228 mit etwa 128°C austretende Kühlwasser auf eine Temperatur von etwa 83°C abgekühlt wird, mit welcher Temperatur es über das Ventil 251 gedrosselt in die Leitung 252 wieder in den Kühlwasservorwärmer 253 eintritt. Eine Verringerung des Energieeinsatzes im Kühlwasservorwärmer 253 ist offensichtlich. Das Kühlwasser im ersten Kühlwassersystem wird nur so weit abgekühlt, daß keine Nachverdampfung im drucklos betriebenen Kühlwasservorwärmer 253 mehr stattfinden kann.

Figur 4 zeigt auch, daß bei diesem Ausführungsbeispiel der Vorrichtung 211 kein zweites Kühlwassersystem mehr verwendet wird, obwohl dies entsprechend dem Ausführungsbeispiel der Figur 1 oder der Figur 3 verwendet werden könnte. Bei diesem Ausführungsbeispiel wird eine Energierückgewinnung aus dem heißen Destillat erreicht; auch kann ein Teil der Wärmeenergie für andere Zwecke verwendet werden.

Bei dem in Figur 4 dargestellten Ausführungsbeispiel wird ferner in die Leitung 212 ein Vorlaufgefäß 295 eingebracht, in welches die gasförmigen und tröpfchenförmigen Abfallprodukte aus dem Gasentfernungssystem rückgeführt werden. So werden die über die verschließbare Rohrleitung 233 vorzugsweise intervallmäßig aus dem Kondensator 228 ausgelassenen leichteren Gase, insbesondere Inertgase, in das Vorlaufgefäß 295 rückgeführt. Gleiches gilt für die Gase, die über die Rohrleitung 242 aufgrund eines Überdrucks aus der Entgasungsstation 238 ausgeblasen werden. Diese Gase werden über eine Leitung 296 zum Vorlaufgefäß 295 rückgeführt. Auch die im Zyklonabscheider 226 auszentrifugierten Tröpfchen und Partikel, die über das Rohr 229 ausgebracht werden, werden über eine Leitung 297 zum Vorlaufgefäß 295 rückgeführt. Damit wird der Wärmeinhalt dieser gasförmigen und tröpfchenförmigen Abfallprodukte dem belasteten Wasser im Vorlaufgefäß 295 zugeführt, was erstens eine geringere Belastung der Umwelt durch diese Abfallprodukte und zweitens eine Enthalpieerhöhung des belasteten Wassers bedeutet, so daß dieses sich von bspw. etwa 20°C auf 25°C erwärmt. Außerdem verhindert die abgetauchte Einführung der Austrittsöffnungen der vorgenannten, insbesondere der gasförmigen Abfallprodukte in eine kühle Wasservorlage das Auftreten des Zuwachsens dieser Austrittsöffnungen, die durch Abkühlungskristallisation bedingt ist.

Bei den Ausführungsbeispielen nach den Figuren 3 und 4, bei denen zur Abkühlung des betreffenden Kühlwassers ein Heiz-/Kühlgerät verwendet ist, kann die Temperatur im betreffenden Kühlwassersystem und damit auch die Temperatur im gesamten Gasentfernungssystem dadurch verändert werden, daß die Leistung des Gebläses des betreffenden Heiz-/Kühlgerätes verändert wird.

## Patentansprüche

1. Verfahren zur Gasentfernung bei der Eindampfung von organisch und/oder anorganisch belastetem Wasser, bei dem das belastete Wasser unter geringem Überdruck in einem Ausdampfgefäß verdampft und der belastete Wasserdampf in einem Kondensator bei nur wenig verringertem Überdruck und wenig verringerter Temperatur kondensiert wird und bei dem das gereinigte Wasserdampfkondensat und die sich bei der Verdampfung gelösten Gase, die schwerer als Wasserdampf sind, in getrennten Ebenen bei gleichbleibender Temperatur zu einer gemeinsamen Entgasungsstation abgezogen werden, **dadurch gekennzeichnet,** daß der Kondensatspiegel der Entgasungsstation auf einem vorgegebenen Niveau geregelt gehalten wird.

2. Verfahren nach Anspruch 1, dadurch gekennzeichnet, daß die Zufuhr von Kühlwasser zum Kondensator über die im Kondensator oder in der Entgasungsstation erfaßte Temperatur des Destillats geregelt wird.

3. Verfahren nach Anspruch 1 oder 2, dadurch gekennzeichnet, daß an mindestens einer oberen Stelle des Kondensators solche Gase, die leichter als Wasserdampf sind, abgelassen werden.

4. Verfahren nach mindestens einem der Ansprüche 1 bis 3, dadurch gekennzeichnet, daß die Ausdampfgeschwindigkeit aus dem Ausdampfgefäß im Bereich von ≦ 0,1 m/s gehalten wird.

5. Verfahren nach mindestens einem der vorhergehenden Ansprüche, dadurch gekennzeichnet, daß der belastete Wasserdampf am Ausgang des Ausdampfgefäßes durch einen Zyklonabscheider geführt wird.

6. Verfahren nach mindestens einem der vorhergehenden Ansprüche, dadurch gekennzeichnet, daß das Kühlwasser in einem ersten Kühlwassersystem zum Kondensieren des gereinigten Wasserdampfes auf eine Temperatur im Kondensator eingestellt wird, die eine Kondensation des Wasserdampfes knapp unterhalb seiner Verdampfungstemperatur ermöglicht, wobei das Kühlwasser aufgeheizt wird.

7. Verfahren nach mindestens einem der vorhergehenden Ansprüche, dadurch gekennzeichnet, daß ein zweites Kühlwassersystem zum Rückkühlen des Destillats nach der Gasentfernung und/oder zum Rückkühlen des Kühlwassers im ersten Kühlwassersystem verwendet wird.

8. Verfahren nach Anspruch 6 oder 7, dadurch gekennzeichnet, daß der Wärmeinhalt des Kühlwassers im ersten und/oder zweiten Kühlwassersystem durch ein kombiniertes Heiz-/Kühlgerät abgeführt wird.

9. Verfahren nach Anspruch 8, dadurch gekennzeichnet, daß die Temperatur im Kühlwassersystem und damit im Gasentfernungssystem durch Verändern der Leistung des kombinierten Heiz-/Kühlgerätes geregelt wird.

10. Verfahren nach einem der Ansprüche 1 bis 6, dadurch gekennzeichnet, daß das belastete Wasser zum Rückkühlen des Destillats nach der Gasentfernung verwendet wird.

11. Verfahren nach einem der vorhergehenden Ansprüche, dadurch gekennzeichnet, daß die im Gasentfernungssystem anfallenden gasförmigen und/oder tröpfchenförmigen Abfallprodukte in das zugeführte belastete Wasser rückgeführt werden.

12. Vorrichtung zur Durchführung eines Verfahrens nach mindestens einem der Ansprüche 1 bis 11, mit einem Ausdampfgefäß (16,116,216) zum Ausdampfen des zu reinigenden belasteten Wassers, mit einem Kondensator (28,128,228) zum Kondensieren des belasteten Wasserdampfes und mit einem Kühlwassersystem, wobei der Kondensator (28,128,228) über zwei auf unterschiedlichem Niveau befindliche Abzugsleitungen (36,37;136,137;236,237) bodenseitig mit einer Entgasungsstation (38,138,238) verbunden ist, dadurch gekennzeichnet, daß der Kondensatspiegel (39,139,239) der Entgasungsstation (38,138,238) von einem Regler erfaßt ist, welcher mit einem Destillatausgangsventil (47,147,247) verbunden ist.

13. Vorrichtung nach Anspruch 12, dadurch gekennzeichnet, daß für die Entgasungsstation (38,138,238) ein Temperaturregelgerät (62,162,262) vorgesehen ist, das mit einem Kühlwassereingangsventil (61,161,261) zum Kondensator (29,128,228) gekoppelt ist.

14. Vorrichtung nach Anspruch 12 oder 13, dadurch gekennzeichnet, daß an mindestens einer oberen Stelle des Kondensators (28,128,228) ein Ventil (32,132,232) zum Ablassen solcher Gase, die leichter als Wasserdampf sind, vorgesehen ist.

15. Vorrichtung nach mindestens einem der Ansprüche 12 bis 14, dadurch gekennzeichnet, daß zwischen dem Ausdampfgefäß (16,116,216) und dem Kondensator (28,128,228) ein Zyklonabscheider (26,126,226) angeordnet ist.

16. Vorrichtung nach mindestens einem der Ansprüche 12 bis 15, dadurch gekennzeichnet, daß ein Kühlwasser-Vorwärmer (53,153,253) vorgesehen ist.

17. Vorrichtung nach mindestens einem der Ansprüche 12 bis 16, dadurch gekennzeichnet, daß ein erster Rückkühler (46,146,246) für das Destillat vorgesehen ist.

18. Vorrichtung nach mindestens einem der Ansprüche 12 bis 17, dadurch gekennzeichnet, daß ein zweiter Rückkühler (64,164) für das erwärmte Kühlwasser vorgesehen ist.

19. Vorrichtung nach mindestens einem der Ansprüche 16 bis 18, dadurch gekennzeichnet, daß der Kühlwasser-Vorwärmer (53,153,253) in einem ersten Kühlwassersystem und die beiden Rückkühler (46,64;146) in einem zweiten Kühlwassersystem vorgesehen sind.

20. Vorrichtung nach Anspruch 19, dadurch gekennzeichnet, daß das erste Kühlwassersystem ein geschlossenes System ist und ein kominiertes Heiz-/Kühlgerät (107,207) beinhaltet.

21. Vorrichtung nach Anspruch 19 oder 20, dadurch gekennzeichnet, daß das zweite Kühlwassersystem ein geschlossenes System ist und ein kombiniertes Heiz-/Kühlgerät (102) und eine Pumpe (105) beinhaltet.

22. Vorrichtung nach Anspruch 17, dadurch gekennzeichnet, daß der erste Rückkühler (146,246) in der Zuführleitung für das belastete Wasser vorgesehen ist.

23. Vorrichtung nach mindestens einem der Ansprüche 12 bis 22, dadurch gekennzeichnet, daß am unteren Ende des Ausdampfgefäßes (16,116,216) ein kegelförmiges Austragsteil (22) leicht lösbar befestigt ist.

24. Vorrichtung nach mindestens einem der Ansprüche 12 bis 23, dadurch gekennzeichnet, daß das mit einem Niveauregler (21,121,221) versehene Ausdampfgefäß (16,116,216) in Höhe des Spiegels (19,119,219) des belasteten Wassers mit einem Schauglas (74) versehen ist.

25. Vorrichtung nach mindestens einem der Ansprüche 12 bis 24, dadurch gekennzeichnet, daß der Zyklonabscheider (26,126,226) am oberen Ende des Ausdampfgefäßes (16,116,216) auswechselbar gehalten ist.

26. Vorrichtung nach mindestens einem der Ansprüche 12 bis 25, dadurch gekennzeichnet, daß der Kondensator (28,128,228) auf dem Ausdampfgefäß (16,116,216) lösbar befestigt ist.

27. Vorrichtung nach den Ansprüchen 25 und 26, dadurch gekennzeichnet, daß der Zyklonabscheider (26,126,226) in einem Raum zwischen dem Kondensator (28,128,228) und dem Ausdamfgefäß (16,116,216) befestigt und mit einem in den Kondensator ragenden Dampfführungsgrohr (27,127,227) versehen ist.

28. Vorrichtung nach einem der Ansprüche 12 bis 27, dadurch gekennzeichnet, daß die im Gasentfernungssystem anfallenden gasförmigen und/oder tröpfchenförmigen Abfallprodukte über eine Rohrleitung (233,296,297) in das zugeführte belastete Wasser rückführbar sind.

## Claims

1. Process for removing gas in the evaporation of organically and/or inorganically contaminated water, in which the contaminated water is evaporated at a slight excess pressure in an evaporation vessel and the contaminated water vapour is condensed in a condenser at an only slightly reduced excess pressure and at a slightly reduced temperature and in which the purified water vapour condensate and the gases which are heavier than water vapour released during evaporation are evacuated to a common degassing station in separate planes at a uniform temperature, characterised in that the condensate in the degassing station is kept at a predetermined level.

2. Process according to claim 1, characterised in that the supply of cooling water to the condenser is controlled via the temperature of the distillate detected in the condenser or in the degassing station.

3. Process according to claim 1 or claim 2, characterised in that those gases which are lighter than water vapour are discharged at at least one upper point of the condenser.

4. Process according to at least one of claims 1 to 3, characterised in that the rate of evaporation out of the evaporation vessel is kept in the region of ≦ 0.1 m/s.

5. Process according to at least one of the preceding claims, characterised in that the contaminated water vapour is guided through a cyclone separator at the outlet of the evaporation vessel.

6. Process according to at least one of the preceding claims, characterised in that the cooling water in a first cooling water system for condensing the purified water vapour is adjusted to a temperature in the condenser allowing for condensation of the water vapour just below its evaporation temperature, the cooling water being heated.

7. Process according to at least one of the preceding claims, characterised in that a second cooling water system is used for recooling the distillate after the removal of the gas and/or for recooling the cooling water in the first cooling water system.

8. Process according to claim 6 or claim 7, characterised in that the heat content of the cooling water in the first and/or second cooling water system is dissipated by a combined heater/cooler.

9. Process according to claim 8, characterised in that the temperature in the cooling water system and thus in the gas removal system is controlled by varying the output of the combined heater/cooler.

10. Process according to one of claims 1 to 6, characterised in that the contaminated water is used for recooling the distillate after the removal of the gas.

11. Process according to one of the preceding claims, characterised in that the gaseous and/or globular waste products produced in the gas removal system are returned to the contaminated water supplied.

12. Device for carrying out a process according to at least one of claims 1 to 11, comprising an evaporation vessel (16, 116, 216) for evaporating the contaminated water to be purified, a condenser (28, 128, 228) for condensing the contaminated water vapour and a cooling water system, the condenser (28, 128, 228) being connected at the bottom to a degassing station (38, 138, 238) via two evacuation lines (36, 37; 136, 137; 236, 237) situated at different levels, characterised in that the condensate level (39, 139, 239) of the degassing station (38, 138, 238) is detected by a control means which is connected to a distillate outlet valve (47, 147, 247).

13. Device according to claim 12, characterised in that a temperature control means (62, 162, 262) is provided for the degassing station (38, 138, 238) and is coupled to a cooling water inlet valve (61, 161, 261) leading to the condenser (28, 128, 228).

14. Device according to claim 12 or claim 13, characterised in that a valve (32, 132, 232) for discharging those gases which are lighter than water vapour is provided at at least one upper point of the condenser (28, 128, 228).

15. Device according to at least one of claims 12 to 14, characterised in that a cyclone separator (26, 126, 226) is arranged between the evaporation vessel (16, 116, 216) and the condenser (28, 128, 228).

16. Device according to at least one of claims 12 to 15, characterised in that a cooling water heater (53, 153, 253) is provided.

17. Device according to at least one of claims 12 to 16, characterised in that a first recooler (46, 146, 246) is provided for the distillate.

18. Device according to at least one of claims 12 to 17, characterised in that a second recooler (64, 164) is provided for the heated cooling water.

19. Device according to at least one of claims 16 to 18, characterized in that the cooling water heater (53, 153, 253) is provided in a first cooling water system and the two recoolers (46, 64; 146) are provided in a second cooling water system.

20. Device according to claim 19, characterised in that the first cooling water system is a closed system and contains a combined heater/cooler (107, 207).

21. Device according to claim 19 or claim 20, characterised in that the second cooling water system is a closed system and contains a combined heater/cooler (102) and a pump (105).

22. Device according to claim 17, characterised in that the first recooler (146, 246) is provided in the supply line for the contaminated water.

23. Device according to at least one of claims 12 to 22, characterised in that a conical discharge part (22) is secured in an easily removable manner to the lower end of the evaporation vessel (16, 116, 216).

24. Device according to at least one of claims 12 to 23, characterised in that the evaporation vessel (16, 116, 216) provided with a level controller (21, 121, 221) is provided with a viewing window (74) at the level (19, 119, 219) of the contaminated water.

25. Device according to at least one of claims 12 to 24, characterised in that the cyclone separator (26, 126, 226) is exchangeably mounted at the upper end of the evaporation vessel (16, 116, 216).

26. Device according to at least one of claims 12 to 25, characterised in that the condenser (28, 128, 228) is removably secured to the evaporation vessel (16, 116, 216).

27. Device according to claims 25 and 26, characterised in that the cyclone separator (26, 126, 226) is secured in a space between the condenser (28, 128, 228) and the evaporation vessel (16, 116, 216) and is provided with a water vapour guide tube (27, 127, 227) projecting into the condenser.

28. Device according to one of claims 12 to 27, characterised in that the gaseous and/or globular waste products produced in the gas removal system can be returned via a pipe (233, 296, 297) to the contaminated water supplied.

## Revendications

1. Procédé d'élimination des gaz lors de l'évaporation d'eau chargée de composés organiques et/ou inorganiques, dans lequel l'eau chargée est évaporée sous une légère surpression dans un évaporateur et la vapeur d'eau chargée se condense dans un condensateur avec une surpression qui n'est diminuée que très peu et une température qui n'est diminuée que très peu, et dans lequel le condensat épuré de la vapeur d'eau et les gaz libérés par l'évaporation qui sont plus lourds que la vapeur d'eau sont amenés à des niveaux différents mais à la même température vers un poste d'élimination commun des gaz, caractérisé en ce que la surface du condensat du poste d'élimination des gaz est maintenue à un niveau prédéterminé,

2. Procédé selon la revendication 1, caractérisé en ce que l'alimentation en eau de refroidissement du condensateur est ajustée par la température du distillat qui se trouve dans le condenseur ou dans le poste d'élimination des gaz.

3. Procédé selon la revendication 1 ou 2, caractérisé en ce que les gaz qui sont plus légers que la vapeur d'eau sont libérés au moins à partir d'un point haut du condensateur.

4. Procédé selon au moins une des revendications 1 à 3, caractérisé en ce que la vitesse d'évaporation depuis l'évaporateur est maintenue dans le domaine ≦ 0,1 m/s.

5. Procédé selon au moins une des revendications précédentes, caractérisé en ce que la vapeur d'eau chargée à la sortie de l'évaporateur passe à travers un séparateur à cyclone.

6. Procédé selon au moins une des revendications précédentes, caractérisé en ce que l'eau de refroidissement dans un premier système de refroidissement à eau pour condenser la vapeur d'eau épurée est ajustée pour avoir une température dans le condenseur (où elle se réchauffe) permettant une condensation de la vapeur d'eau juste en dessous de sa température d'évaporation.

7. Procédé selon au moins une des revendications précédentes, caractérisé en ce que l'on utilise un second système de refroidissement à eau pour condenser le distillat après l'élimination des gaz et/ou pour refroidir l'eau de refroidissement dans le premier système de refroidissement.

8. Procédé selon la revendication 6 ou 7, caractérisé en ce que le contenu calorique de l'eau de refroidissement dans le premier et/ou le second système de refroidissement à eau est ajusté par un appareil combiné de chauffage et/ou de refroidissement.

9. Procédé selon la revendication 8, caractérisé en ce que la température dans le système d'eau de refroidissement et donc dans le système d'élimination des gaz est ajustée en modifiant la puissance de l'appareil combiné de chauffage et/ou de refroidissement.

10. Procédé selon une des revendications 1 à 6, caractérisé en ce que l'on utilise l'eau chargée pour condenser le distillat après l'élimination des gaz.

11. Procédé selon l'une quelconque des revendications précédentes, caractérisé en ce que les produits d'épuration formant des gaz et/ou des gouttelettes apparaissant dans le système d'élimination des gaz sont retournés dans l'alimentation en eau chargée.

12. Installation pour mettre en oeuvre un procédé selon au moins une des revendications 1 à 11, comportant un évaporateur (16, 116, 216) pour évaporer l'eau chargée à purifier, un condenseur (28, 128, 228) pour condenser la vapeur d'eau chargée et un système de refroidissement à eau, où le condenseur (28, 128, 228) est connecté par deux conduites situées à des niveaux différents (36, 37; 136, 137; 236, 237) au bas du poste d'élimination des gaz (38, 138, 238), caractérisé en ce que le niveau du condensat (39, 139, 239) du poste d'élimination des gaz (38, 138, 238) est déterminé par un appareil régulateur qui commande une soupape de sortie du distillat (47, 147, 247).

13. Installation selon la revendication 12, caractérisée en ce que le poste d'élimination de gaz (38, 138, 238) est pourvu d'un appareil de régulation de la température (62, 162, 262) qui commande une soupape d'admission d'eau de refroidissement (61, 161, 262) alimentant le condenseur (28, 128, 228).

14. Installation selon la revendication 12 ou 13, caractérisée en ce qu'au moins un point haut du condensateur (28, 128, 228) comporte une soupape (32, 132, 232) pour laisser partir les gaz qui sont plus légers que la vapeur d'eau.

15. Installation selon au moins une des revendications 12 à 14, caractérisée en ce qu'entre l'évaporateur (16, 116, 216) et le condenseur (28, 128, 228), il est prévu un séparateur à cyclone (26, 126, 226)

16. Installation selon au moins une des revendications 12 à 15, caractérisée en ce que l'on prévoit un refroidisseur/réchauffeur à eau (53, 153, 253).

17. Installation selon au moins une des revendications 12 à 16, caractérisée en ce que l'on prévoit un premier réfrigérant de retour (46, 146, 246) pour le distillat.

18. Installation selon au moins une des revendications 12 à 17, caractérisée en ce que l'on prévoit un second réfrigérant de retour (64, 164) pour l'eau de refroidissement réchauffée.

19. Installation selon au moins une des revendications 16 à 18, caractérisée en ce que le refroidisseur/réchauffeur à eau (53, 153, 253) est monté dans un premier système de refroidissement à eau et les deux réfrigérants de retour (46, 64; 146) sont montés dans un second système de refroidissement à eau.

20. Installation selon la revendication 19, caractérisée en ce que le premier système de refroidissement à eau est un système fermé et comporte un système combiné de chauffage/de refroidissement (107, 207).

21. Installation selon la revendication 19 ou 20, caractérisée en ce que le second système de refroidissement à eau est un système fermé et comporte un système combiné de chauffage/de refroidissement (102) et une pompe (105).

22. Installation selon la revendication 17, caractérisée en ce qu'il est prévu un premier réfrigérant de retour (146, 246) dans la conduite d'alimentation de l'eau chargée.

23. Installation selon au moins une des revendications 12 à 22, caractérisée en ce que le bas de l'évaporateur (16, 116, 216) est pourvu d'un élément de soutirage conique (22), monté d'une manière aisément amovible.

24. Installation selon au moins une des revendications 12 à 23, caractérisée en ce que l'évaporateur (16, 116, 216), qui est pourvu d'un régulateur de niveau (21, 121, 221), comporte un hublot (74) au niveau de la surface (19, 119, 219) de l'eau chargée.

25. Installation selon au moins une des revendications 12 à 24, caractérisée en ce que le séparateur à cyclone (26, 126, 226) est monté d'une manière amovible à l'extrémité supérieure de l'évaporateur (16, 116, 216).

26. Installation selon au moins une des revendications 12 à 25, caractérisée en ce que le condenseur (28, 128, 228) est monté d'une manière amovible sur l'évaporateur (16, 116, 216)

27. Installation selon les revendications 25 et 26, caractérisée en ce que le séparateur à cyclone (26, 126, 226) est monté dans un espace entre le condenseur (28, 128, 228) et l'évaporateur (16, 116, 216) et qu'il est pourvu d'une conduite pour l'alimentation en vapeur, qui fait saillie dans le condenseur (27, 127, 227).

28. Installation selon une des revendications 12 à 27, caractérisée en ce que les produits d'épuration formant des gaz et/ou des gouttelettes apparaissant dans le système d'élimination des gaz sont retournés par une conduite (233, 296, 297) dans l'eau d'alimentation chargée.
